(19) Europäisches Patentamt
European Patent Office
Office européen des brevets

(11) **EP 3 411 264 B1**

(12) **EUROPÄISCHE PATENTSCHRIFT**

(45) Veröffentlichungstag und Bekanntmachung des Hinweises auf die Patenterteilung:
**19.07.2023 Patentblatt 2023/29**

(21) Anmeldenummer: **17701057.6**

(22) Anmeldetag: **11.01.2017**

(51) Internationale Patentklassifikation (IPC):
**B60L 1/02** (2006.01)  **B60L 53/60** (2019.01)
**B60L 53/68** (2019.01)

(52) Gemeinsame Patentklassifikation (CPC):
**B60L 53/60; B60L 1/02; B60L 53/68;**
B60L 2240/72; Y02T 10/70; Y02T 10/7072;
Y02T 10/72; Y02T 90/12; Y02T 90/16; Y02T 90/167

(86) Internationale Anmeldenummer:
**PCT/EP2017/050470**

(87) Internationale Veröffentlichungsnummer:
**WO 2017/133869 (10.08.2017 Gazette 2017/32)**

(54) **VERFAHREN UND SYSTEM ZUM AUFLADEN VON KRAFTFAHRZEUGEN AN ÖFFENTLICHEN LADESTATIONEN**

METHOD AND SYSTEM FOR CHARGING MOTOR VEHICLES AT PUBLIC CHARGING STATIONS

PROCÉDÉ ET SYSTÈME DE RECHARGE DE VÉHICULES AUTOMOBILES À DES STATIONS DE CHARGE PUBLIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.02.2016 DE 102016201491**

(43) Veröffentlichungstag der Anmeldung:
**12.12.2018 Patentblatt 2018/50**

(73) Patentinhaber: **Vitesco Technologies Germany GmbH**
**93055 Regensburg (DE)**

(72) Erfinder: **FENDT, Günter Anton**
**86529 Schrobenhausen (DE)**

(74) Vertreter: **Vitesco Technologies**
**Landsberger Str. 187, Haus D**
**80687 München (DE)**

(56) Entgegenhaltungen:
**EP-A1- 2 825 849      EP-A1- 2 894 436**
**US-A1- 2011 193 522**

**Beschreibung**

Technisches Gebiet:

Die folgende Erfindung betrifft ein Verfahren und ein System zum Aufladen von mehreren Kraftfahrzeugen, insbesondere Hybridelektro-/Elektrofahrzeugen, an mehreren öffentlichen Ladestationen.

Stand der Technik:

Es gibt elektrisch aufladbare Kraftfahrzeuge, insbesondere Hybridelektro-/Elektrofahrzeuge, deren Batterien, insbesondere Traktionsbatterien, von stationären öffentlichen Ladestationen aufgeladen werden können. Technisch bedingt nehmen die Ladevorgänge der Kraftfahrzeuge an den Ladestationen in der Regel mehrere Stunden in Anspruch.
Aufgrund der langen Ladedauer und der aktuell beschränkten Anzahl von öffentlichen Ladestationen kommt es oft zu Staus an den Ladestationen. Dies führt zu ineffizienter Nutzung der Kraftfahrzeuge. Andererseits kommt es trotz der aktuell beschränkten Anzahl von Ladestationen vor, dass manche Ladestationen (z. B. aufgrund der für Fahrer ungünstigen Lage) selten benutzt werden. Dies führt zu ineffizienter Nutzung der öffentlichen Ladestationen.
Aus der WO 2014/127849 A1 ist System zur Routenbestimmung für Elektrofahrzeuge bekannt, wobei Merkmale von Ladestationen berücksichtigt werden und verschiedene Fahrzeuge unterschiedlichen Ladestationen zugeordnet werden.
Die EP 2 894 436 A1 offenbart ein Ladeunterstützungs-Verfahren und -System für Elektrofahrzeuge. Zu ladende Fahrzeuge werden erkannt, und an verfügbare Ladestation geleitet. Die Summe aus Wartezeit vor dem Ladevorgang und der Ladezeit selbst werden damit reduziert.
Damit besteht die Aufgabe der vorliegenden Erfindung darin, eine Möglichkeit bereitzustellen, die ökonomische und ökologische Effizienz bei der Nutzung von den elektrisch aufladbaren Kraftfahrzeugen und den öffentlichen Ladestationen weiter zu steigern.

Beschreibung der Erfindung:

Diese Aufgabe wird durch Gegenstände der unabhängigen Ansprüche gelöst. Vorteilhafte Ausgestaltungen sind Gegenstand der Unteransprüche.
Gemäß einem ersten Aspekt der Erfindung wird ein Verfahren zum Aufladen von mehreren Kraftfahrzeugen, insbesondere Hybridelektro-/Elektrofahrzeugen, an mehreren öffentlichen Ladestationen bereitgestellt.
Gemäß dem Verfahren werden Freigabezeitpunkte ermittelt, zu denen die jeweiligen Ladestationen zum Aufladen (nächster Kraftfahrzeuge) freigegeben werden. Sind die Ladestationen nicht von Kraftfahrzeugen belegt, so sind die Freigabezeitpunkte diese Ladestationen bspw. die aktuelle Uhrzeit. Sind die Ladestationen mit Kraftfahrzeugen belegt und laden aktuell diese Kraftfahrzeuge auf, so sind die entsprechenden Freigabezeitpunkte die Zeitpunkte, zu denen die jeweiligen Kraftfahrzeuge (voraussichtlich) fertig aufgeladen sein werden.
Gemäß dem Verfahren werden ferner Ankunftszeitpunkte ermittelt, zu denen die jeweiligen Kraftfahrzeuge an den jeweiligen Ladestationen (voraussichtlich) ankommen können. Die Ankunftszeitpunkte werden basierend auf der aktuellen Urzeit und den Zeitdauern berechnet, die erforderlich sind, dass die jeweiligen Kraftfahrzeuge an den jeweiligen Ladestationen (voraussichtlich) ankommen können. Die Zeitdauer werden insb. abhängig von zu befahrenden Strecken, ggfs. in Verbindung mit Verkehrssituationen und Verkehrszeichen in diesen Strecken, wie z. B. der Geschwindigkeitsbegrenzung, berechnet.
Gemäß dem Verfahren werden ferner Zeitabstände zwischen den jeweiligen ermittelten Freigabezeitpunkten und den jeweiligen ermittelten Ankunftszeitpunkten als erforderliche Wartezeiten zum Aufladen der jeweiligen Kraftfahrzeuge an den jeweiligen Ladestationen berechnet, für welche die jeweiligen Kraftfahrzeuge zum Aufladen an den jeweiligen Ladestationen warten müssten.
In Abhängigkeit der berechneten Wartezeiten wird anschließend entschieden, welche der Ladestationen die jeweiligen Kraftfahrzeuge zum Aufladen anfahren werden. Dabei werden die berechneten Wartezeiten miteinander verglichen und aus denen eine minimal erforderliche Gesamt-Wartezeit aller Kraftfahrzeuge an den jeweiligen Ladestationen ermittelt. Diejenigen Wartezeiten, welche die minimale Gesamt-Wartezeit ausbilden, werden dann ausgewählt. Die Zuordnungen der Kraftfahrzeuge zu den entsprechenden Ladestationen werden festgelegt, aus denen die zuvor ausgewählten Wartezeiten ermittelt sind. Die Kraftfahrzeuge werden dann zu den entsprechenden Ladestationen derselben festgelegten Zuordnungen zugewiesen und von diesen Ladestationen aufgeladen.
Der Erfindung liegen die Erkenntnisse zugrunde, dass zur Steigerung der ökonomischen und ökologischen Effizienz beim elektrischen Laden von Kraftfahrzeugen, insb. Hybridelektro-/Elektrofahrzeugen, jedes der Kraftfahrzeuge zum Aufladen gerade dann an einer der voneinander geographisch entfernt liegenden Ladestationen ankommen soll, wenn die entsprechende Ladestation gerade frei zum Aufladen ist. Bei einer Vielzahl von aufzuladenden Kraftfahrzeugen und einer vergleichsweise geringen Anzahl von belegten oder zur Verfügung stehenden Ladestationen bedarf es dabei eine interoperative Lösung (anstatt einer bisher bekannten Insellösung), bei der die Vielzahl aufzuladenden Kraftfahrzeuge und sämtliche belegte und nicht belegte, voneinander geographisch entfernt liegende Ladestationen anhand eines einheitlichen Entscheidungsalgorithmus zum Zuordnen der aufzuladenden Kraftfahrzeuge zu den jeweiligen Ladestationen berücksichtigt werden. Damit bilden die Kraftfahrzeuge und die Ladestationen ein gemeinsames Netz, in dem die Kraftfahrzeuge und die Ladestationen miteinander regelmäßig Daten austauschen und dadurch die Ladevorgänge der Kraftfahrzeuge im Hinblick auf der gesamten ökonomischen und ökologischen Effizienz optimieren können. Dadurch soll/kann vermieden werden, dass mehrere Kraftfahrzeuge zum Aufladen eine und derselbe (belegten) Ladestation anfahren, oder eine oder anderen Ladestationen über eine lange Zeit unbenutzt bleiben, was bei der bekannten Insellösung der Fall ist.

Im Rahmen der Erfindung wurde ferner erkannt, dass für die interoperative Lösung die Freigabezeitpunkte, zu denen die jeweiligen Ladestationen zum Aufladen freigegeben werden, und die Ankunftszeitpunkte relevant sind, zu denen die jeweiligen Kraftfahrzeuge an den jeweiligen Ladestationen ankommen können.

Basierend auf diese Erkenntnisse wurde das zuvor beschriebene Verfahren bereitgestellt.

Die Berechnung der Wartezeiten zum Aufladen der jeweiligen Kraftfahrzeuge an den jeweiligen Ladestationen, für welche die jeweiligen Kraftfahrzeuge zum Aufladen an den jeweiligen Ladestationen warten müssten, schafft dann die Entscheidungsgrundlage, auf welcher basierend und anhand eines einheitlichen Entscheidungsalgorithmus dann im Hinblick auf der gesamten ökonomischen und ökologischen Effizienz der elektrisch aufladbaren Kraftfahrzeuge und aller Ladestationen entschieden werden kann, welche der Kraftfahrzeuge zum Aufladen zu welchen der Ladestationen fahren sollen, um die Effizienz zu steigern.

Dabei wird die Entscheidung, welches der Kraftfahrzeuge zum Aufladen welche der Ladestationen anfahren wird, unter der Maßgabe gefällt, eine Gesamt-Wartezeit zu minimieren, welche eine Summe von Wartezeiten der elektrisch aufladbaren Kraftfahrzeugen an den öffentlichen Ladestationen ausbildet, welche anfallen würden, wenn die Ladestationen von den Kraftfahrzeugen zum Aufladen tatsächlich angefahren würden.

Mit dem oben beschriebenen Verfahren ist somit eine Möglichkeit bereitgestellt, die Effizienz bei der Nutzung von den elektrisch aufladbaren Kraftfahrzeugen und den öffentlichen Ladestationen insgesamt zu steigern.

Erfindungsgemäß werden ferner Energiebedarfe der jeweiligen Kraftfahrzeuge ermittelt, welche die jeweiligen Kraftfahrzeuge zum Anfahren der jeweiligen Ladestationen erforderlich sind. Die ermittelten Energiebedarfe werden anschließend miteinander verglichen. In Abhängigkeit des Vergleichsergebnisses wird entschieden, welche der Ladestationen die jeweiligen Kraftfahrzeuge zum Aufladen anfahren werden. Dabei werden die Energiebedarfe vorzugsweise anhand der Distanzen der jeweiligen Kraftfahrzeuge zu den jeweiligen Ladestationen und der Verbrauchswerte der jeweiligen Kraftfahrzeuge berechnet. Die Entscheidung, welches der Kraftfahrzeuge zum Aufladen welche der Ladestationen anfahren wird, wird dabei ferner unter der Maßgabe gefällt, einen Gesamt-Energiebedarf zu minimieren, welcher eine Summe von Energiebedarfen ausbildet, welche die Kraftfahrzeuge zum tatsächlichen Anfahren der entsprechenden Ladestationen verbrauchen würden.

Erfindungsgemäß werden die ermittelten Energiebedarfe und die zuvor ermittelten Wartezeiten gewichtet und einem Entscheidungsalgorithmus unterzogen. Je nach ökologischen oder ökonomischen Relevanz können die Energiebedarfe und die Wartezeiten unterschiedlich gewichtet werden. Ist die ökologische Relevanz höher als die ökonomische Relevanz, so können die Energiebedarfe höher gewichtet werden als die Wartezeiten. Umgekehrt ist die ökologische Relevanz niedriger als die ökonomische Relevanz, so können die Energiebedarfe niedriger gewichtet werden als die Wartezeiten. Die gewichteten Energiebedarfe und die gewichteten Wartezeiten werden entsprechend den Kraftfahrzeugen bzw. den Ladestationen paarweise zu jeweiligen Entscheidungsbasiswerten zusammengefügt bzw. summiert. Anhand dieser Entscheidungsbasiswerte wird dann in der ökologischen bzw. ökonomischen Hinsicht entschieden, welches der Kraftfahrzeug zum Aufladen welche der Ladestationen anfahren wird.

Vorzugsweise werden ferner Reichweiten der jeweiligen Kraftfahrzeuge ermittelt. Die Reichweiten werden bspw. anhand der verbliebenen Ladezustände der Traktionsbatterien der jeweiligen Kraftfahrzeuge ermittelt. In Abhängigkeit von den ermittelten Reichweiten wird entschieden, welche der Ladestationen die jeweiligen Kraftfahrzeuge zum Aufladen anfahren werden. Die Entscheidung, welches der Kraftfahrzeuge zum Aufladen welche der Ladestationen anfahren wird, wird dabei ferner unter der Maßgabe gefällt, ob die Reichweiten der jeweiligen Kraftfahrzeuge zum Anfahren der jeweiligen Ladestationen ausreichen. Die Entscheidungen hinsichtlich der Wartezeiten bzw. der Energiebedarfe werden somit nur dann getroffen, wenn die jeweiligen Ladestationen für die entsprechenden Kraftfahrzeuge basierend auf deren jeweiligen Reichweiten auch erreichbar sind.

Vorzugsweise werden ferner mögliche Fahrrouten zu Fahrtzielen ermittelt, welche die jeweiligen Kraftfahrzeuge aktuell anzufahren haben. Diese Fahrrouten werden bspw. anhand der von Fahrern eingegebenen Fahrtziele in Verbindung mit Navigationsdaten ermittelt. In Abhängigkeit der ermittelten Fahrrouten wird anschließend entschieden, welche der Ladestationen die jeweiligen Kraftfahrzeuge zum Aufladen anfahren werden. Die Entscheidung, welches der Kraftfahrzeuge zum Aufladen welche der Ladestationen anfahren wird, wird somit ferner unter der Maßgabe gefällt, ob die Ladestationen in den ermittelten Fahrrouten der jeweiligen Kraftfahrzeuge bzw. zumindest in der Nähe dieser Fahrrouten liegen. Liegt eine oder andere Ladestationen nicht in bzw. nicht nah zu den ermittelten Fahrouten, so kommen diese Ladestationen für die entsprechenden Kraftfahrzeuge bei der oben beschriebenen Entscheidung nicht in Frage.

Gemäß einem weiteren Aspekt der Erfindung wird ein System zum Aufladen von mehreren Kraftfahrzeugen, insbesondere Hybridelektro-/Elektrofahrzeugen, an mehreren öffentlichen Ladestationen bereitgestellt.

Das System umfasst eine erste Ermittlungsanordnung, welche eingerichtet ist, Freigabezeitpunkte zu ermitteln, zu denen die jeweiligen Ladestationen zum Aufladen (nächster Kraftfahrzeuge) freigegeben werden.

Das System umfasst ferner eine zweite Ermittlungsanordnung, welche eingerichtet ist, Ankunftszeitpunkte zu ermitteln, zu denen die jeweiligen Kraftfahrzeuge an den jeweiligen Ladestationen ankommen können.

Das System umfasst ferner eine Berechnungsanordnung, welche eingerichtet ist, Zeitabstände zwischen den jeweiligen ermittelten Freigabezeitpunkten und den jeweiligen ermittelten Ankunftszeitpunkten als erforderliche Wartezeiten zu berechnen, für welche die jeweiligen Kraftfahrzeuge zum Aufladen an den jeweiligen Ladestationen warten müssten.

Das System umfasst ferner eine Entscheidungsanordnung, welche eingerichtet ist, in Abhängigkeit (wie oben beschrieben) der berechneten Wartezeiten zu entscheiden, welche der Ladestationen die jeweiligen Kraftfahrzeuge zum Aufladen anfahren werden.

Dabei ist das System eine Zusammenlegung von zuvor aufgelisteten Anordnungen, welche dezentral in den Ladestationen und den Fahrzeugen sowie öffentlichen oder privatgesellschaftlichen Verkehrskontroll-/-servicezentren, wie z. B. Koordinationsstellen zum elektrischen Aufladen von Hybridelektro-/Elektrofahrzeugen, verteilt angeordnet sind. Dabei dienen diese Anordnungen zum Durchführen des oben beschriebenen Verfahrens und bilden somit eine Einheit aus, welche das oben genannte System ausmacht.

Vorteilhafte Ausgestaltungen des oben beschriebenen Verfahrens sind, soweit möglich, auf das oben genannte System übertragbar, auch als vorteilhafte Ausgestaltungen des Systems anzusehen.

Kurze Beschreibung der Zeichnung:

Im Folgenden wird eine beispielhafte Ausführungsform der Erfindung Bezug nehmend auf die beiliegende Zeichnung näher erläutert. Dabei zeigen:

Figur 1    in einer schematischen Darstellung ein System zum Aufladen von mehreren Elektrofahrzeugen an mehreren öffentlichen Ladestationen gemäß einer Ausführungsform der Erfindung; und

Figur 2    in einem schematischen Ablaufdiagramm ein Verfahren zum Aufladen der Elektrofahrzeuge an den Ladestationen gemäß der Ausführungsform in Figur 1.

Detaillierte Beschreibung der Zeichnung:

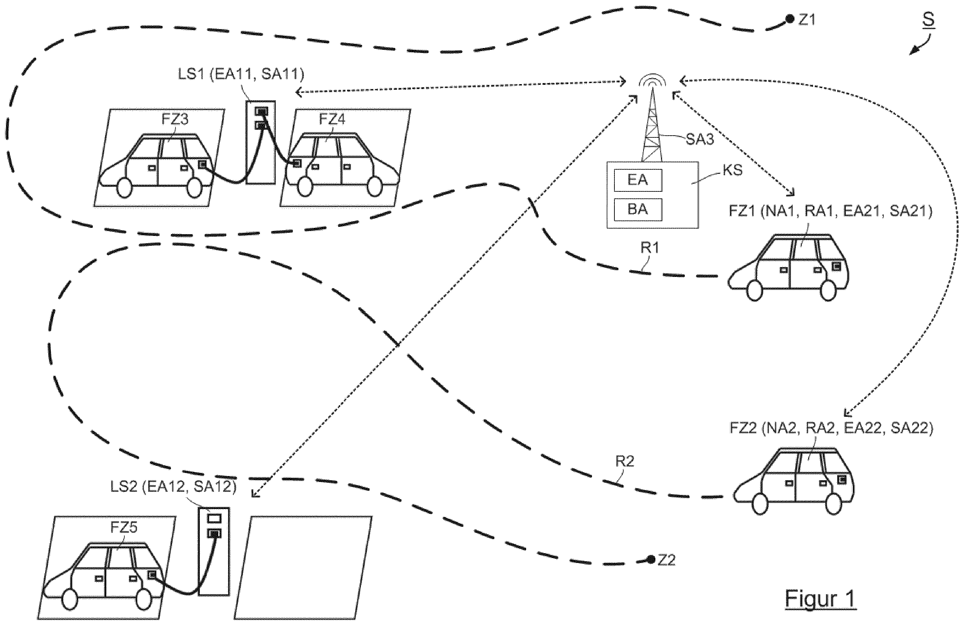

Figur 1 zeigt in einer schematischen Darstellung zwei Elektrofahrzeuge FZ1, FZ2 mit entsprechenden Fahrrouten R1, R2 zu jeweiligen Fahrzielen Z1, Z2, zu welchen die jeweiligen Elektrofahrzeuge FZ1, FZ2 demnächst fahren sollen. Die Elektrofahrzeuge FZ1, FZ2 umfassen jeweils eine Navigationsanordnung NA1, NA2, mit welchen die jeweiligen Fahrrouten R1, R2 zu den jeweiligen Fahrzielen Z1, Z2 ermittelt werden.

Ferner zeigt Figur 1 zwei öffentliche Ladestationen LS1, LS2 in den Fahrrouten R1, R2 der beiden Elektrofahrzeuge FZ1, FZ2, an denen weitere Elektrofahrzeuge FZ3, FZ4, FZ5 zum Aufladen elektrisch angeschlossen sind.

Die Ladestationen LS1, LS2 weisen jeweils eine Ladesäule mit zwei Ladeanschlüssen auf, an denen zeitgleich zwei Elektrofahrzeuge FZ3, FZ4 per Ladekabel angeschlossen und aufgeladen werden können. Außerdem umfassen die Ladestationen LS1, LS2 jeweils zwei Stellplätze, auf denen die Elektrofahrzeuge FZ1, FZ2, FZ3, FZ4, FZ5 beim Aufladen abgestellt werden können.

Dabei ist die Anzahl der Ladestationen LS1, LS2 (so wie in der Realität) wesentlich kleiner als die Anzahl der Elektrofahrzeuge FZ1, FZ2, FZ3, FZ4, FZ5, welche mit den Ladestationen LS1, LS2 aufgeladen werden müssen. Sind die Ladestationen LS1, LS2 gerade mit aufladenden Elektrofahrzeugen wie z. B. FZ3, FZ4, FZ5 belegt und kommen weitere Elektrofahrzeuge wie z. B. FZ1, FZ2 zum Aufladen an, so müssen die nachkommenden Elektrofahrzeuge FZ1, FZ2 für längere Zeit warten, bis die gerade aufladenden Elektrofahrzeuge FZ3, FZ4, FZ5 fertig aufgeladen sind.

Andererseits können zu einer oder anderen freien Ladestationen wie z. B. LS2 zeitgleich mehrere Elektrofahrzeuge wie z. B. FZ1, FZ2 ankommen, was zu unnötigen Anfahren mancher der Elektrofahrzeuge wie z. B. FZ1, FZ2 führen kann.

Im Gegensatz dazu können eine oder andere Ladestationen wie z. B. LS2 für längere Zeit frei stehen, weil die Elektrofahrzeuge wie z. B. FZ1, FZ2, FZ3, FZ4 ungünstiger Weise alle dieselben (belegten) Ladestationen, wie z. B. LS1, angefahren haben.

Damit werden einerseits die bestehenden Ressourcen verschwendet. Andererseits werden die Ladevorgänge der Elektrofahrzeuge FZ1, FZ2, FZ3, FZ4, FZ5 im Bezug auf Energie-/Zeitverbrauch ineffizient.

Um diesen Nachteilen entgegenzuwirken, ist ein System S vorgesehen, mit welchem das elektrische Aufladen der Elektrofahrzeuge FZ1, FZ2, FZ3, FZ4, FZ5 mit einer beschränkten Anzahl von Ladestationen LS1, LS2 energie- und zeiteffizient durchgeführt werden kann.

Dabei ist das System S eine Zusammenlegung von unterschiedlichen, dezentral ausgeführten, nachfolgend zu beschreibenden Anordnungen EA11, EA12, EA21, EA22, SA11, SA12, SA21, SA22, SA3, NA1, NA2, BA, EA, welche ihrerseits wiederum dezentral verteilt in den Ladestationen LS1, LS2 und in den Elektrofahrzeugen FZ1, FZ2, FZ3, FZ4, FZ5 sowie in einer zentral oder dezentral ausgebildeten Koordinationsstelle KS zum Aufladen der Elektrofahrzeuge FZ1, FZ2, FZ3, FZ4, FZ5 angeordnet bzw. ausgeführt sind, jedoch zum Durchführen derselben Aufgabe, nämlich zum ökonomisch und ökologisch effizienten Aufladen der Elektrofahrzeuge FZ1, FZ2, FZ3, FZ4, FZ5, ausgebildet sind.

Das System S umfasst erste Ermittlungsanordnungen EA11, EA12, welche jeweils an einer der beiden Ladestationen LS1, LS2 angeordnet sind und eingerichtet sind, voraussichtliche Freigabezeitpunkte tf11, tf12; tf21, tf22 zu ermitteln, zu denen die jeweiligen Ladeanschlüsse der jeweiligen Ladestationen LS1, LS2 zum Aufladen nächster Elektrofahrzeuge freigegeben werden. Hierzu ermitteln die ersten Ermittlungsanordnungen EA11, EA12 anhand aktueller Ladestände der jeweiligen, zum Aufladen angeschlossenen Kraftfahrzeuge FZ3, FZ4, FZ5 sowie aktueller Ladeleistungen voraussichtliche Ladedauer. Basierend auf der aktuellen Uhrzeit und der voraussichtlichen Ladedauer ermitteln die ersten Ermittlungsanordnungen EA11, EA12 dann die jeweiligen voraussichtlichen Freigabezeitpunkte tf11, tf12; tf21, tf22.

Das System S umfasst ferner Reichweiten-Ermittlungsanordnungen RA1, RA2, welche in den jeweiligen Elektrofahrzeugen FZ1, FZ2 angeordnet sind und eingerichtet sind, basierend auf die Ladezustände der Traktionsbatterien der jeweiligen Elektrofahrzeuge FZ1, FZ2 in einer dem Fachmann bekannten Weise Reichweiten der entsprechenden Elektrofahrzeuge FZ1, FZ2 zu ermitteln.

Das System S umfasst ferner die zuvor genannten, fahrzeugseitigen Navigationsanordnungen NA1, NA2, welche ferner eingerichtet sind, Ladestationen LS1, LS2 in den Fahrrouten R1, R2 der jeweiligen Elektrofahrzeuge FZ1, FZ2 zu ermitteln, welche die jeweiligen Elektrofahrzeuge FZ1, FZ2 mit den verbliebenen Ladungen noch erreichen können.

Das System S umfasst ferner zweite Ermittlungsanordnungen EA21, EA22, welche an den jeweiligen Elektrofahrzeugen FZ1, FZ2 (FZ3, FZ4, FZ5) angeordnet sind und eingerichtet sind, voraussichtliche Ankunftszeitpunkte fall, ta12; ta21, ta22 zu ermitteln, zu denen die jeweiligen Elektrofahrzeuge FZ1, FZ2 an den jeweiligen Ladestationen LS1, LS2 ankommen können.

Die Ladestationen LS1, LS2 und die Elektrofahrzeuge FZ1, FZ2 umfassen ferner jeweils eine Signalsende-/-empfangsanordnung SA11, SA12; SA21, SA22, über welche die Ladestationen LS1, LS2 und die Elektrofahrzeuge FZ1, FZ2 miteinander bzw. mit der Koordinationsstelle KS Daten austauschen können.

Die Koordinationsstelle KS umfasst eine entsprechende Signalsende-/-empfangsanordnung SA3, über welche die Koordinationsstelle KS mit den Ladestationen LS1, LS2 und den Elektrofahrzeugen FZ1, FZ2 Daten austauscht.

Das System S umfasst ferner eine Berechnungsanordnung BA, eine Entscheidungsanordnung EA, welche in der Koordinationsstelle KS angeordnet sind.

Die Berechnungsanordnung BA ist eingerichtet, Zeitabstände zwischen den jeweiligen ermittelten Freigabezeitpunkten tf11, tf12; tf21, tf22 und den jeweiligen ermittelten Ankunftszeitpunkten fall, ta12; ta21, ta22 als erforderlichen Wartezeiten tw1, tw2, tw3, tw4, tw5, tw6, tw7, tw8 in einer nachfolgend zu beschreibenden Weise zu berechnen und die berechneten Wartezeiten tw1, tw2, tw3, tw4, tw5, tw6, tw7, tw8 an die nachgeschaltete Entscheidungsanordnung EA weiterzuleiten.

Die Entscheidungsanordnung EA ist eingerichtet, in Abhängigkeit der übermittelten Wartezeiten tw1, tw2, tw3, tw4, tw5, tw6, tw7, tw8 und weiteren nachfolgend zu beschreibenden Entscheidungsbasen zu entscheiden, welche der Ladestationen LS1, LS2 die jeweiligen Elektrofahrzeuge FZ1, FZ2 zum Aufladen anfahren sollen.

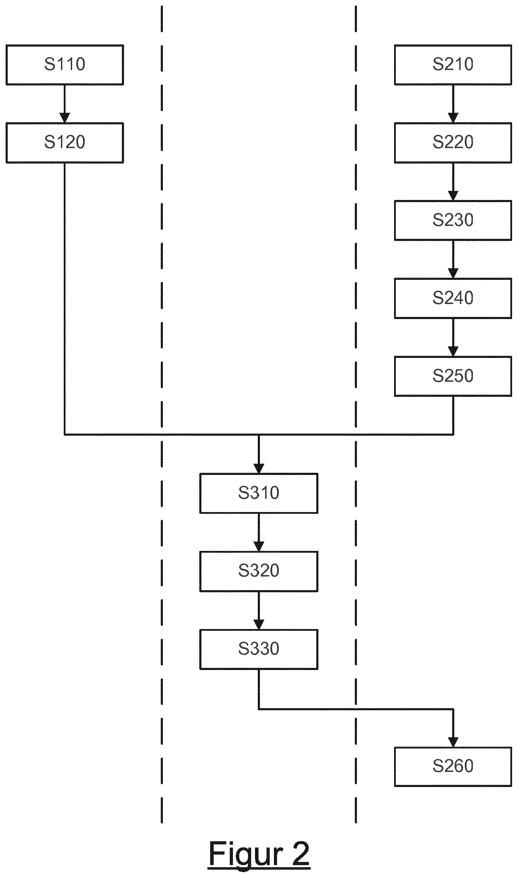

Nachdem das System S zum Aufladen der Elektrofahrzeuge FZ1, FZ2, FZ3, FZ4, FZ5 anhand Figur 1 beschrieben wurde, wird nachfolgend dessen Funktionsweise anhand Figur 2 näher beschrieben:

Die ersten, ladestationsseitigen Ermittlungsanordnungen EA1 der jeweiligen Ladestationen LS1, LS2 ermitteln gemäß einem Verfahrensschritt S110 regelmäßig, insb. wenn die jeweiligen Ladestationen LS1, LS2 belegt sind und Elektrofahrzeuge FZ3, FZ4, FZ5 aufladen, die Freigabezeitpunkten tf11, tf12; tf21, tf22.

Dabei ermitteln die ersten Ermittlungsanordnungen EA1 die Freigabezeitpunkte tf11, tf12; tf21, tf22 basierend auf der aktuellen Uhrzeit und den restlichen Ladedauern der jeweiligen Ladeanschlüsse der entsprechenden Ladestationen LS1, LS2.

Die Ladestationen LS1, LS2 übermitteln dann gemäß einem weiteren Verfahrensschritt S120 über die jeweiligen ladestationsseitigen Sende-/Empfangsanordnungen SA11, SA12 Daten über die ermittelten Freigabezeitpunkte tf11, tf12; tf21, tf22 und ggfs. Daten über die Koordinaten, wie z. B. Adressen, der entsprechenden Ladestationen LS1, LS2 an die Koordinationsstelle KS.

Unabhängig davon ermitteln die fahrzeugseitigen Reichweiten-Ermittlungsanordnungen RA1, RA2 gemäß einem weiteren Verfahrensschritt S210, in regelmäßigen Zeitabständen, insb. wenn die Ladezustände der jeweiligen Traktionsbatterien der entsprechenden Elektrofahrzeuge FZ1, FZ2 unter einer vorgegebenen Ladezustandsschwelle fallen, basierend auf den Ladezuständen der jeweiligen Traktionsbatterien in einer dem Fachmann bekannten Weise Reichweiten der jeweiligen Elektrofahrzeuge FZ1, FZ2 und leiten die ermittelten Reichweiten an die jeweiligen nachgeschalteten Navigationsanordnungen NA1, NA2 der entsprechenden Elektrofahrzeuge FZ1, FZ2.

Die Navigationsanordnungen NA1, NA2 ermitteln gemäß einem weiteren Verfahrensschritt S220 basierend auf den vorliegenden zuvor ermittelten Fahrrouten R1, R2 und den erhaltenen Reichweiten Ladestationen LS1, LS2, deren Koordinaten bzw. Adressen von den Navigationsanordnungen NA1, NA2 bekannt sind, und zu denen die jeweiligen Elektrofahrzeuge FZ1, FZ2 mit den jeweiligen verbliebenen Ladezuständen noch erreichen können.

Sind die erreichbaren Ladestationen LS1, LS2 gefunden, so ermitteln die zweiten, fahrzeugseitigen Ermittlungsanordnungen EA2 gemäß einem weiteren Verfahrensschritt S230 Ankunftszeitpunkte fall, ta12; ta21, ta22, zu denen die jeweiligen Elektrofahrzeuge FZ1, FZ2 zu den jeweiligen gefundenen Ladestationen LS1, LS2 ankommen können (d. h., sofern diese die entsprechenden Ladestationen anfahren würden). Die Ankunftszeitpunkte ta11, ta12, ta21, ta22 ermitteln die zweiten Ermittlungsanordnungen EA2 basierend auf der aktuellen Uhrzeit und voraussichtlichen Fahrtdauern der jeweiligen Elektrofahrzeuge FZ1, FZ2 zu den jeweiligen Ladestationen LS1, LS2, wobei die zweiten Ermittlungsanordnungen EA2 die voraussichtlichen Fahrtdauer anhand der Navigationsdaten der Navigationsanordnungen NA1, NA2 der jeweiligen Elektrofahrzeuge FZ1, FZ2 in einer dem Fachmann bekannten Weise ermitteln.

Ferner ermitteln die zweiten Ermittlungsanordnungen EA21, EA22 anhand der Navigationsdaten gemäß einem weiteren Verfahrensschritt S240 in einer dem Fachmann bekannten Weise Energiebedarfe, welche die jeweiligen Elektrofahrzeuge FZ1, FZ2 voraussichtlich aufwenden müssen, um zu den jeweiligen gefundenen Ladestationen LS1, LS2 zu gelangen.

Die Elektrofahrzeuge FZ1, FZ übermitteln dann gemäß einem weiteren Verfahrensschritt S250 über die jeweiligen fahrzeugseitigen Sende-/Empfangsanordnungen SA21, SA22 Daten, wie z. B. Adressen, der gefundenen Ladestationen LS1, LS2, Daten über die jeweiligen potentiellen Ankunftszeitpunkte ta11, ta12; ta21, ta22 sowie über die jeweiligen Energiebedarfe an die Koordinationsstelle KS.

Die Berechnungsanordnung BA der Koordinationsstelle KS berechnet aus den von den Ladestationen LS1, LS2 und den Elektrofahrzeugen FZ1, FZ2 erhaltenen Daten gemäß einem weiteren Verfahrensschritt S310 Zeitabstände zwischen den jeweiligen ermittelten Freigabezeitpunkten tf11, tf12; tf21, tf22 und den jeweiligen ermittelten Ankunftszeitpunkten ta11, ta12; ta21, ta22 als erforderlichen Wartezeiten tw1, tw2, tw3, tw4, tw5, tw6, tw7, tw8, für welche die jeweiligen Elektrofahrzeuge FZ1, FZ2 an den jeweiligen Ladestationen LS1, LS2 warten müssen, bis die entsprechenden Ladestationen LS1, LS2 zum Aufladen dieser Elektrofahrzeuge FZ1, FZ2 freigegeben werden. Dabei berechnet die Berechnungsanordnung BA die Wartezeiten tw1, tw2, tw3, tw4, tw5, tw6, tw7, tw8 anhand folgender Gleichungen:

$$tw1 = tf11 - ta11; \quad tw2 = tf12 - ta11;$$

$$tw3 = tf21 - ta12; \quad tw4 = tf22 - ta12;$$

$$tw5 = tf11 - ta21; \quad tw6 = tf12 - ta21;$$

$$tw7 = tf21 - ta22; \quad tw8 = tf22 - ta22.$$

Dabei ist die Wartezeit tw1 der Zeitabstand zwischen einem voraussichtlichen Freigabezeitpunkt tf11 eines der beiden Ladeanschlüsse einer der beiden Ladestationen LS1 zu einem voraussichtlichen Ankunftszeitpunkt fall eines der beiden Elektrofahrzeuge FZ1 an dieser Ladestation LS1. Analog ist die Wartezeit tw6 der Zeitabstand zwischen einem voraussichtlichen Freigabezeitpunkt tf12 eines der beiden Ladeanschlüsse der weiteren Ladestationen LS2 zu einem voraussichtlichen Ankunftszeitpunkt ta21 des weiteres Elektrofahrzeugs FZ2 an dieser Ladestation LS2.

Ist die entsprechende Wartezeit tw1, tw2, tw3, tw4, tw5, tw6, tw7 bzw. tw8 größer als 0 (Null), muss das entsprechende Elektrofahrzeug FZ1, FZ2 an der entsprechenden Ladestation LS1, LS2 zuerst warten, bis es an dem entsprechenden Ladeanschluss der jeweiligen Ladestation LS1, LS2 aufgeladen werden kann. Ist die entsprechende Wartezeit tw1, tw2, tw3, tw4, tw5, tw6, tw7 bzw. tw8 dagegen gleich oder kleiner als 0 (Null), so kann das entsprechende Elektrofahrzeug FZ1, FZ2 sofort an dem entsprechenden Ladeanschluss angeschlossen und von diesem aufgeladen werden, wenn es die entsprechende Ladestation LS1, LS2 erreicht.

Abschließend leitet die Berechnungsanordnung BA die berechneten Wartezeiten tw1, tw2, tw3, tw4, tw5, tw6, tw7, tw8 an die nachgeschaltete Entscheidungsanordnung EA weiter.

Die Entscheidungsanordnung EA vergleicht die Wartezeiten tw1, tw2, tw3, tw4, tw5, tw6, tw7, tw8 miteinander und entscheidet gemäß einem weiteren Verfahrensschritt S320 und im Hinblick auf die Energiebedarfe, welche die Entscheidungsanordnung EA von den fahrzeugseitigen zweiten Ermittlungsanordnungen EA21, EA22 über die fahrzeugseitigen und die koordinationsstelleseitige Sende-/Empfangsanordnungen SA21, SA22, SA3 erhält, welche der Elektrofahrzeuge FZ1, FZ2 zum Aufladen welche der Ladestationen LS1, LS2 anfahren sollen. Hierzu erwägt die Entscheidungsanordnung EA die jeweiligen erforderlichen Wartezeiten tw1, tw2, tw3, tw4, tw5, tw6, tw7, tw8 an den jeweiligen Ladestationen LS1, LS2 und die entsprechenden Energiebedarfe von den jeweiligen Elektrofahrzeugen FZ1, FZ2 zum Erreichen der entsprechenden Ladestationen LS1, LS2 und trifft die Entscheidung, welche in ökonomischer und ökologischer Sicht am Effizientesten ist.

Anschließend übermittelt die Entscheidungsanordnung EA basierend auf der zuvor betroffenen Entscheidung und gemäß einem weiteren Verfahrensschritt S330 Daten, wie z. B. Adressen, der entsprechenden Ladestationen LS1, LS2, welche die Elektrofahrzeuge FZ1, FZ2 zum Aufladen anfahren sollen, mithilfe der koordinationsstelleseitige Sende-/Empfangsanordnung SA3 an die jeweiligen fahrzeugseitigen Navigationsanordnungen NA1, NA2.

Empfangen die fahrzeugseitigen Navigationsanordnungen NA1, NA2 von der koordinationsstelleseitige Sende-/Empfangsanordnung SA3 die Daten der entsprechenden Ladestationen LS1, LS2, so geben diese gemäß einem weiteren Verfahrensschritt S260 die empfangenen Daten, wie z. B. die Adressen, der entsprechenden Ladestationen LS1, LS2 als Zwischenziele automatisch in die Fahrrouten R1, R2 der jeweiligen Elektrofahrzeuge FZ1, FZ2 ein.

Die Elektrofahrzeuge FZ1, FZ2 fahren dann - ggfs. nach einer erfolgten Bestätigung der entsprechenden Fahrer - zum Aufladen zu den entsprechenden Ladestationen LS1, LS2.

## Patentansprüche

1. Verfahren zum Aufladen von mehreren Kraftfahrzeugen (FZ1, FZ2), insb. Hybridelektro-/Elektrofahrzeugen, an mehreren öffentlichen Ladestationen (LS1, LS2), mit folgenden Schritten:

   - Ermitteln (S110) von Freigabezeitpunkten (tf1, tf2), zu denen die jeweiligen Ladestationen (LS1, LS2) zum Aufladen freigegeben werden;
   - Ermitteln (S230) von Ankunftszeitpunkten (fall, ta12; ta21, ta22), zu denen die jeweiligen Kraftfahrzeuge (FZ1, FZ2) an den jeweiligen Ladestationen (LS1, LS2) ankommen können;
   - Berechnen (S310) von Zeitabständen zwischen den jeweiligen ermittelten Freigabezeitpunkten (tf1, tf2) und den jeweiligen ermittelten Ankunftszeitpunkten (fall, ta12; ta21, ta22) als erforderlichen Wartezeiten (tw11, tw12; tw21, tw22) zum Aufladen der jeweiligen Kraftfahrzeuge (FZ1, FZ2) an den jeweiligen Ladestationen (LS1, LS2);
   - Ermitteln (S240) von Energiebedarfen (Eb11, Eb12; Eb21, Eb22) der jeweiligen Kraftfahrzeuge (FZ1, FZ2) zum Anfahren der jeweiligen Ladestationen (LS1, LS2);

   **gekennzeichnet durch** die weiteren Schritte:

   - Vergleichen (S600) der ermittelten Energiebedarfe (Eb11, Eb12; Eb21, Eb22) miteinander;
   - Entscheiden (S320) in Abhängigkeit der berechneten Wartezeiten (tw11, tw12; tw21, tw22), und in Abhängigkeit des Vergleichsergebnisses zwischen den ermittelten Energiebedarfen (Eb11, Eb12; Eb21, Eb22) welche der Ladestationen (LS1, LS2) die jeweiligen Kraftfahrzeuge (FZ1, FZ2) zum Aufladen anfahren werden,
   - unter der Maßgabe, eine Gesamt-Wartezeit zu minimieren, welche eine Summe von Wartezeiten (tw12, tw21) zum Aufladen der jeweiligen Kraftfahrzeuge (FZ1, FZ2) an den jeweiligen Ladestationen (LS1, LS2) ausbildet und
   - unter der Maßgabe, einen Gesamt-Energiebedarf zu minimieren, welcher eine Summe von Energiebedarfen ausbildet, welche die Kraftfahrzeuge zum tatsächlichen Anfahren der entsprechenden Ladestationen verbrauchen würden,
   - indem die ermittelten Energiebedarfe und die zuvor ermittelten Wartezeiten gewichtet und einem Entscheidungsalgorithmus unterzogen werden.

2. Verfahren nach Anspruch 1, ferner mit folgendem Schritt:

   - Ermitteln (S210) von Reichweiten (Rw1, Rw2) der jeweiligen Kraftfahrzeuge (FZ1, FZ2);
   - wobei der Schritt des Entscheidens (S320) ferner vorsieht, dass in Abhängigkeit der ermittelten Reichweiten (Rw1, Rw2) entschieden wird, welche der Ladestationen (LS1, LS2) die jeweiligen Kraftfahrzeuge (FZ1, FZ2) zum Aufladen anfahren werden.

3. Verfahren nach einem der vorangehenden Ansprüche, ferner mit folgendem Schritt:

- Ermitteln (S220) von möglichen Fahrrouten (R1, R2) zu Fahrtzielen (Z1, Z2), welche die jeweiligen Kraftfahrzeuge (FZ1, FZ2) anzufahren haben;
- wobei der Schritt des Entscheidens (S320) ferner vorsieht, dass in Abhängigkeit der ermittelten Fahrrouten (R1, R2) entschieden wird, welche der Ladestationen (LS1, LS2) die jeweiligen Kraftfahrzeuge (FZ1, FZ2) zum Aufladen anfahren werden.

4. System (S) zum Aufladen von mehreren Kraftfahrzeugen (FZ1, FZ2), insb. Hybridelektro-/Elektrofahrzeugen, an mehreren öffentlichen Ladestationen (LS1, LS2), umfassend:

- mindestens eine erste Ermittlungsanordnung (EA11, EA12) zum Ermitteln (S110) von Freigabezeitpunkten (tf11, tf12; tf21, tf22), zu denen die jeweiligen Ladestationen (LS1, LS2) zum Aufladen freigegeben werden;
- mindestens eine zweite Ermittlungsanordnung (EM2) zum Ermitteln (S230) von Ankunftszeitpunkten (fall, ta12; ta21, ta22), zu denen die jeweiligen Kraftfahrzeuge (FZ1, FZ2) an den jeweiligen Ladestationen (LS1, LS2) ankommen können,
- wobei die zweite Ermittlungsanordnung ferner zum Ermitteln von Energiebedarfen eingerichtet ist, welche die jeweiligen Kraftfahrzeuge (FZ1, FZ2) voraussichtlich aufwenden müssen, um zu den jeweiligen gefundenen Ladestationen (LS1, LS2) zu gelangen;
**gekennzeichnet durch**
- mindestens eine Berechnungsanordnung (BR) zum Berechnen (S310) von Zeitabständen zwischen den jeweiligen ermittelten Freigabezeitpunkten (tf1, tf2) und den jeweiligen ermittelten Ankunftszeitpunkten (fall, ta12; ta21, ta22) als erforderlichen Wartezeiten (tw11, tw12; tw21, tw22) zum Aufladen der jeweiligen Kraftfahrzeuge (FZ1, FZ2) an den jeweiligen Ladestationen (LS1, LS2);
- eine Entscheidungsanordnung (EA) zum Entscheiden (S320) welche der Ladestationen (LS1, LS2) die jeweiligen Kraftfahrzeuge (FZ1, FZ2) zum Aufladen anfahren werden in Abhängigkeit der berechneten Wartezeiten (tw11, tw12; tw21, tw22) sowie in Abhängigkeit eines Vergleichsergebnisses zwischen den ermittelten Energiebedarfen, ,
- unter der Maßgabe, eine Gesamt-Wartezeit zu minimieren, welche eine Summe von Wartezeiten (tw12, tw21) zum Aufladen der jeweiligen Kraftfahrzeuge (FZ1, FZ2) an den jeweiligen Ladestationen (LS1, LS2) ausbildet und
- unter der Maßgabe, einen Gesamt-Energiebedarf zu minimieren, welcher eine Summe von Energiebedarfen ausbildet, welche die Kraftfahrzeuge zum tatsächlichen Anfahren der entsprechenden Ladestationen verbrauchen würden,
- indem die ermittelten Energiebedarfe und die zuvor ermittelten Wartezeiten gewichtet und einem Entscheidungsalgorithmus unterzogen werden.

## Claims

1. Method for charging a plurality of motor vehicles (FZ1, FZ2), in particular hybrid electric/electric vehicles, at a plurality of public charging stations (LS1, LS2), having the following steps:

- determining (S110) release times (tf1, tf2) at which the respective charging stations (LS1, LS2) are released for charging;
- determining (S230) arrival times (ta11, ta12; ta21, ta22) at which the respective motor vehicles (FZ1, FZ2) may arrive at the respective charging stations (LS1, LS2);
- calculating (S310) intervals of time between the respective determined release times (tf1, tf2) and the respective determined arrival times (ta11, ta12; ta21, ta22) as required waiting times (tw11, tw12; tw21, tw22) for charging the respective motor vehicles (FZ1, FZ2) at the respective charging stations (LS1, LS2);
- determining (S240) energy requirements (Eb11, Eb12; Eb21, Eb22) of the respective motor vehicles (FZ1, FZ2) for approaching the respective charging stations (LS1, LS2);

**characterized by** the further steps of:

- comparing (600) the determined energy requirements (Eb11, Eb12; Eb21, Eb22) with one another;
- deciding (S320), on the basis of the calculated waiting times (tw11, tw12; tw21, tw22) and on the basis of the result of the comparison between the determined energy requirements (Eb11, Eb12; Eb21, Eb22), which of the charging stations (LS1, LS2) will be approached by the respective motor vehicles (FZ1, FZ2) for charging,
- with the proviso that a total waiting time, which forms a sum of waiting times (tw12, tw21) for charging the respective motor vehicles (FZ1, FZ2) at the respective charging stations (LS1, LS2), is minimized, and
- with the proviso that a total energy requirement, which forms a sum of energy requirements which would be consumed by the motor vehicles in order to actually approach the corresponding charging stations, is minimized,
- by weighting the determined energy requirements and the previously determined waiting times and subjecting them to a decision-making algorithm.

2. Method according to Claim 1, also having the following step:

- determining (S210) ranges (Rw1, Rw2) of the respective motor vehicles (FZ1, FZ2);
- wherein the deciding step (S320) also provides for a decision to be made, on the basis of the determined ranges (Rw1, Rw2), as to which of the charging stations (LS1, LS2) will be approached by the respective motor vehicles (FZ1, FZ2) for charging.

3. Method according to one of the preceding claims, also having the following step:

- determining (S220) possible driving routes (R1, R2) to destinations (Z1, Z2) which need to be approached by the respective motor vehicles (FZ1, FZ2);
- wherein the deciding step (S320) also provides for a decision to be made, on the basis of the determined driving routes (R1, R2), as to which of the charging stations (LS1, LS2) will be approached by the respective motor vehicles (FZ1, FZ2) for charging.

4. System (S) for charging a plurality of motor vehicles (FZ1, FZ2), in particular hybrid electric/electric vehicles, at a plurality of public charging stations (LS1, LS2), comprising:

- at least one first determination arrangement (EA11, EA12) for determining (S110) release times (tf11, tf12; tf21, tf22) at which the respective charging stations (LS1, LS2) are released for charging;
- at least one second determination arrangement (EM2) for determining (S230) arrival times (ta11, ta12; ta21, ta22) at which the respective motor vehicles (FZ1, FZ2) may arrive at the respective charging stations (LS1, LS2),
- wherein the second determination arrangement is also configured to determine energy requirements which must presumably be expended by the respective motor vehicles (FZ1, FZ2) in order to reach the respective charging stations (LS1, LS2) which have been found;
**characterized by**
- at least one calculation arrangement (BR) for calculating (S310) intervals of time between the respective determined release times (tf1, tf2) and the respective determined arrival times (ta11, ta12; ta21, ta22) as required waiting times (tw11, tw12; tw21, tw22) for charging the respective motor vehicles (FZ1, FZ2) at the respective charging stations (LS1, LS2);
- a decision-making arrangement (EA) for deciding (S320) which of the charging stations (LS1, LS2) will be approached by the respective motor vehicles (FZ1, FZ2) for charging on the basis of the calculated waiting times (tw11, tw12; tw21, tw22) and on the basis of a result of a comparison between the determined energy requirements,
- with the proviso that a total waiting time, which forms a sum of waiting times (tw12, tw21) for charging the respective motor vehicles (FZ1, FZ2) at the respective charging stations (LS1, LS2), is minimized, and
- with the proviso that a total energy requirement, which forms a sum of energy requirements which would be consumed by the motor vehicles in order to actually approach the corresponding charging stations, is minimized,
- by weighting the determined energy requirements and the previously determined waiting times and subjecting them to a decision-making algorithm.

**Revendications**

1. Procédé pour charger plusieurs véhicules automobiles (FZ1, FZ2), notamment des véhicules hybrides rechargeables / électriques, au niveau de plusieurs bornes de charge (LS1, LS2) publiques, comprenant les étapes suivantes :

- détermination (S110) d'instants de libération (tf1, tf2) auxquels les bornes de charge (LS1, LS2) respectives sont libérées pour la charge ;
- détermination (S230) d'instants d'arrivée (ta11, ta12 ; ta21, ta22) auxquels les véhicules automobiles (FZ1, FZ2) respectifs peuvent arriver aux bornes de charge (LS1, LS2) respectives ;
- calcul (S310) d'intervalles de temps entre les instants de libération (tf1, tf2) respectivement déterminés et les instants d'arrivée (ta11, ta12 ; ta21, ta22) respectivement déterminés en tant que temps d'attente (tw11, tw12 ; tw21, tw22) nécessaires pour la charge des véhicules automobiles (FZ1, FZ2) respectifs aux bornes de charge (LS1, LS2) respectives ;
- détermination (S240) de besoins en énergie (Eb11, Eb12 ; Eb21, Eb22) des véhicules automobiles (FZ1, FZ2) respectifs pour arriver aux bornes de charge (LS1, LS2) respectives ;

**caractérisé par** les étapes supplémentaires :

- comparaison (S600) des besoins en énergie (Eb11, Eb12 ; Eb21, Eb22) déterminés entre eux ;
- décision (S320), en fonction des temps d'attente (tw11, tw12 ; tw21, tw22) calculés et en fonction du résultat de la comparaison entre les besoins en énergie (Eb11, Eb12 ; Eb21, Eb22) déterminés, desquelles des bornes de charge (LS1, LS2) gagneront les véhicules automobiles (FZ1, FZ2) respectifs pour la charge,
- à la condition de réduire au minimum un temps d'attente total, lequel représente une somme de temps d'attente (tw12, tw21) pour la charge des véhicules automobiles (FZ1, FZ2) respectifs aux bornes de charge (LS1, LS2) respectives et
- à la condition de réduire au minimum un besoin en énergie total, lequel représente une somme des besoins en énergie qui devraient être couverts pour que les véhicules automobiles gagnent effectivement les bornes de charge correspondantes,
- en pondérant les besoins en énergie déterminés et les temps d'attente déterminés précédemment et en les soumettant à un algorithme de décision.

2. Procédé selon la revendication 1, comprenant en outre les étapes suivantes :

- détermination (S210) d'autonomies (Rw1, Rw2) des véhicules automobiles (FZ1, FZ2) respectifs ;
- l'étape de décision (S320) prévoyant en outre que celle parmi les bornes de charge (LS1, LS2) qui sera gagnée pour la charge par les véhicules automobiles (FZ1, FZ2) respectifs sera décidée en fonction des autonomies (Rw1, Rw2) déterminées.

3. Procédé selon l'une des revendications précédentes, comprenant en outre les étapes suivantes :

- détermination (S220) des itinéraires de déplacement (R1, R2) possibles vers des destinations (Z1, Z2) que doivent parcourir les véhicules automobiles (FZ1, FZ2) respectifs ;
- l'étape de décision (S320) prévoyant en outre que celle parmi les bornes de charge (LS1, LS2) qui sera gagnée pour la charge par les véhicules automobiles (FZ1, FZ2) respectifs sera décidée en fonction des itinéraires de déplacement (R1, R2) déterminés.

4. Système (S) pour charger plusieurs véhicules automobiles (FZ1, FZ2), notamment des véhicules hybrides rechargeables / électriques, au niveau de plusieurs bornes de charge (LS1, LS2) publiques, comprenant :

- au moins un premier arrangement de détermination (EA11, EA12) destiné à déterminer (S110) des instants de libération (tf11, tf12 ; tf21, tf22) auxquels les bornes de charge (LS1, LS2) respectives sont libérées pour la charge ;
- au moins un deuxième arrangement de détermination (EM2) destiné à déterminer (S230) des instants d'arrivée (ta11, ta12 ; ta21, ta22) auxquels les véhicules automobiles (FZ1, FZ2) respectifs peuvent arriver aux bornes de charge (LS1, LS2) respectives ;
- le deuxième arrangement de détermination étant en outre conçu pour déterminer des besoins en énergie que les véhicules automobiles (FZ1, FZ2) respectifs doivent probablement couvrir pour arriver aux bornes de charge (LS1, LS2) respectivement trouvées ;
**caractérisé par**
- au moins un arrangement de calcul (BR) destiné à calculer (S310) des intervalles de temps entre les instants de libération (tf1, tf2) respectivement déterminés et les instants d'arrivée (ta11, ta12 ; ta21, ta22) respectivement déterminés en tant que temps d'attente (tw11, tw12 ; tw21, tw22) nécessaires pour la charge des véhicules automobiles (FZ1, FZ2) respectifs aux bornes de charge (LS1, LS2) respectives ;
- un arrangement de décision (EA) destiné à décider (S320), en fonction des temps d'attente (tw11, tw12 ; tw21, tw22) calculés et en fonction d'un résultat de comparaison entre les besoins en énergie déterminés, lesquelles des bornes de charge (LS1, LS2) gagneront les véhicules automobiles (FZ1, FZ2) respectifs pour la charge,

- à la condition de réduire au minimum un temps d'attente total, lequel représente une somme de temps d'attente (tw12, tw21) pour la charge des véhicules automobiles (FZ1, FZ2) respectifs aux bornes de charge (LS1, LS2) respectives et
- à la condition de réduire au minimum un besoin en énergie total, lequel représente une somme des besoins en énergie qui devraient être couverts pour que les véhicules automobiles pour gagner effectivement les bornes de charge correspondantes,
- en pondérant les besoins en énergie déterminés et les temps d'attente déterminés précédemment et en les soumettant à un algorithme de décision.

Figur 1

Figur 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014127849 A1
- EP 2894436 A1